# EUROPEAN PATENT APPLICATION

(11) **EP 2 808 661 A1**
(43) Date of publication of application: **03.12.2014**
(21) Application number: 14170823.0
(22) Date of filing: 02.06.2014
(51) Int. Cl.: G01J 3/28, G01J 3/02, G01J 3/36, G02B 27/10

(54) **Spectral image acquiring device and spectral image acquiring method**

(30) Priority: 31.05.2013 JP 2013114841
(71) Applicant: Kabushiki Kaisha TOPCON, Tokyo (JP)
(72) Inventor: Ohtomo, Fumio, Asaki-shi, Saitama (JP); Kumagai, Kaoru, Itabashi-ku, Tokyo (JP); Momiuchi, Masayuki, Itabashi-ku, Tokyo (JP); Osaragi, Kazuki, Itabashi-ku, Tokyo (JP)
(74) Representative: Thorniley, Peter

(57) **Abstract**

A spectral image acquiring device comprises an objective lens (3), a field aperture member (8) for limiting a size of an image passing through the objective lens and focusing, a wavelength selecting member (13) arranged on an optical axis of the objective lens, having two or more wavelength selecting surfaces and having different wavelength selection characteristics for each of the wavelength selecting surfaces, a deflecting member (5) for deflecting partial luminous fluxes passing through the wavelength selecting surface, an image pickup element (7) arranged on the optical axis of the objective lens, and an image forming lens (6) for focusing the partial luminous fluxes deflected by the deflecting member on the image pickup element for each of the partial luminous fluxes.

## Description

### BACKGROUND OF THE INVENTION

The present invention relates to a spectral image acquiring device for acquiring a spectral image in a predetermined wavelength range and a spectral image acquiring method.

In general, when wavelength characteristics of an object are measured, a spectroscope is used, but a normal spectroscope makes measurement of a specific point and cannot perform a spectrometry of the entire object to be measured. Further, when a spectrometry of the entire object to be measured is carried out and a spectral image is acquired, a spectral image acquiring device such as a hyper-spectrometer, for example, is used.

However, since the hyper-spectrometer is a device which scans spectral characteristics on a line and acquires a spectral image, a spectral image can be acquired only when an object to be measured is in a static state. Further, a spectroscope or a hyper-spectrometer has a high wavelength resolving power, but cannot instantaneously measure the wavelength characteristics of the entire object to be measured, and is also expensive.

On the other hand, when recognizing a specific object which is in motion or when observing a growing state of an agricultural product or the like, it is required that a specific wavelength can be measured instantaneously.

### SUMMARY OF THE INVENTION

It is an object of the present invention to provide a spectral image acquiring device and a spectral image acquiring method which can instantaneously measure predetermined wavelength characteristics stably.

To attain the above object, a spectral image acquiring device according to the present invention comprises an objective lens, a field aperture member for limiting a size of an image passing through the objective lens and focusing, a wavelength selecting member arranged on an optical axis of the objective lens, having two or more wavelength selecting surfaces and having different wavelength selection characteristics for each of the wavelength selecting surfaces, a deflecting member for deflecting partial luminous fluxes passing through the wavelength selecting surface, an image pickup element arranged on the optical axis of the objective lens, and an image forming lens for focusing the partial luminous fluxes deflected by the deflecting member on the image pickup element for each of the partial luminous fluxes.

Further, in the spectral image acquiring device according to the present invention, the deflecting member has two or more deflecting elements corresponding to each of the wavelength selecting surfaces and respectively deflecting the partial luminous fluxes passing through each of the wavelength selecting surfaces, and the deflecting elements respectively deflect the partial luminous fluxes so that the partial luminous fluxes cross each other at one point.

Further, in the spectral image acquiring device according to the present invention, the image forming lens is arranged at a crossing position of the partial luminous fluxes.

Further, in the spectral image acquiring device according to the present invention, the deflecting member is a prism.

Further, the spectral image acquiring device according to the present invention further comprises a control device, wherein the control device detects a displacement vector between frame images continuously photographed in the predetermined number of frames, overlaps each frame image based on a detected displacement vector, and integrates a value per each pixel.

Further, in the spectral image acquiring device according to the present invention, the control device extracts a feature point for all of the spectral images, and selects and overlaps the spectral image having feature points that can be compared between the frame images.

Further, the spectral image acquiring device according to the present invention further comprises a wavelength selecting member holding plate and a driving unit for rotating and driving the wavelength selecting member holding plate, wherein in the wavelength selecting member holding plate, two or more of the wavelength selecting members each having two or more of the wavelength selecting surfaces are provided at a predetermined angular pitch, and desired the wavelength selecting member is arranged on an optical path of the luminous fluxes by the rotating and driving of the driving unit.

Further, in the spectral image acquiring device according to the present invention, one of the wavelength selecting surfaces is an entire wavelength transmitting surface, and a feature point is extracted from an image passing through the entire wavelength transmitting surface and focused on the image pickup element.

Further, a spectral image acquiring method according to the present invention comprises a step of dividing luminous fluxes into two or more partial luminous fluxes by two or more wavelength selecting surfaces having different wavelength characteristics, respectively, a step of deflecting each of the partial luminous fluxes passing through the wavelength selecting surfaces by a deflecting member, a step of condensing each of the partial luminous fluxes deflected by the deflecting member by using an image forming lens, and a step of forming an image of the partial luminous fluxes condensed by the image forming lens on an image pickup element and acquiring a frame image having a spectral image with two or more wavelengths.

Further, in the spectral image acquiring method according to the present invention, the step of acquiring the frame image has a step of photographing the frame images in a predetermined number of frames by an image pickup unit, a step of extracting feature points common in each of the frame images, a step of comparing the feature points between the frame images temporally adjacent and detecting a displacement vector between the frame images, a step of correcting positions between the frame images based on the detected displacement vector and overlapping the frame images, and a step of integrating a value per each pixel of an overlapping portion of each of the frame images.

Furthermore, in the spectral image acquiring method according to the present invention, the image pickup unit has a wavelength selecting plate rotatably where two or more wavelength selecting members, having two or more wavelength selecting surfaces, are provided at a predetermined angular pitch, wherein in the step of photographing the frame image, a desired wavelength selecting member is selected by a rotation of the wavelength selecting plate, and the frame image having a spectral image within a desired wavelength range is acquired.

According to the present invention, the spectral image acquiring device comprises an objective lens, a field aperture member for limiting a size of an image passing through the objective lens and focusing, a wavelength selecting member arranged on an optical axis of the objective lens, having two or more wavelength selecting surfaces and having different wavelength selection characteristics for each of the wavelength selecting surfaces, a deflecting member for deflecting partial luminous fluxes passing through the wavelength selecting surface, an image pickup element arranged on the optical axis of the objective lens, and an image forming lens for focusing the partial luminous fluxes deflected by the deflecting member on the image pickup element for each of the partial luminous fluxes. As a result, the same image pickup element can acquire a spectral image for a plurality of wavelengths at the same time and instantaneously, and the stability of the measurement of the spectral image can be improved.

Further, according to the present invention, in the spectral image acquiring device, the deflecting member has two or more deflecting elements corresponding to each of the wavelength selecting surfaces and respectively deflecting the partial luminous fluxes passing through each of the wavelength selecting surfaces, and the deflecting elements respectively deflect the partial luminous fluxes so that the partial luminous fluxes cross each other at one point. As a result, an aperture of the image forming lens can be made smaller, and a reduction of the size of the device and a decrease of a manufacturing cost can be realized.

Further, according to the present invention, the spectral image acquiring device further comprises a control device, wherein the control device detects a displacement vector between frame images continuously photographed in the predetermined number of frames, overlaps each frame image based on a detected displacement vector, and integrates a value per each pixel. As a result, a noise generated in the image pickup element can be reduced when photodetecting.

Further, according to the present invention, in the spectral image acquiring device, the control device extracts a feature point for all of the spectral images, and selects and overlaps the spectral image having feature points that can be compared between the frame images. As a result, the spectral images can be overlapped with each other with high accuracy.

Further, according to the present invention, the spectral image acquiring device further comprises a wavelength selecting member holding plate and a driving unit for rotating and driving the wavelength selecting member holding plate, wherein in the wavelength selecting member holding plate, two or more of the wavelength selecting members each having two or more of the wavelength selecting surfaces are provided at a predetermined angular pitch, and desired the wavelength selecting member is arranged on an optical path of the luminous fluxes by the rotating and driving of the driving unit. As a result, the wavelength selecting member in the wavelength area according to the application or the object to be measured can be selected, and the spectral image can be acquired within a wide wavelength range.

Further, according to the present invention, in the spectral image acquiring device, one of the wavelength selecting surfaces is an entire wavelength transmitting surface, and a feature point is extracted from an image passing through the entire wavelength transmitting surface and focused on the image pickup element. As a result, an image can be acquired by the entire wavelength transmitting surface, and deviation between the frame images can be easily detected by the image.

Further, according to the present invention, the spectral image acquiring method comprises a step of dividing luminous fluxes into two or more partial luminous fluxes by two or more wavelength selecting surfaces having different wavelength characteristics, respectively, a step of deflecting each of the partial luminous fluxes passing through the wavelength selecting surfaces by a deflecting member, a step of condensing each of the partial luminous fluxes deflected by the deflecting member by using an image forming lens, and a step of forming an image of the partial luminous fluxes condensed by the image forming lens on an image pickup element and acquiring a frame image having a spectral image with two or more wavelengths. As a result, the same image pickup element can acquire a spectral image for a plurality of wavelengths at the same time and instantaneously, and the stability of the measurement of the spectral image can be improved.

Further, according to the present invention, in the spectral image acquiring method, the step of acquiring the frame image has a step of photographing the frame images in a predetermined number of frames by an image pickup unit, a step of extracting feature points common in each of the frame images, a step of comparing the feature points between the frame images temporally adjacent and detecting a displacement vector between the frame images, a step of correcting positions between the frame images based on the detected displacement vector and overlapping the frame images, and a step of integrating a value per each pixel of an overlapping portion of each of the frame images. As a result, a noise generated when the frame image is photographed can be reduced.

Furthermore, according to the present invention, in the spectral image acquiring method, the image pickup unit has a wavelength selecting plate rotatably where two or more wavelength selecting members, having two or more wavelength selecting surfaces, are provided at a predetermined angular pitch, wherein in the step of photographing the frame image, a desired wavelength selecting member is selected by a rotation of the wavelength selecting plate, and the frame image having a spectral image within a desired wavelength range is acquired. As a result, the wavelength selecting member in the wavelength area according to the application or the object to be measured can be selected, and the spectral image can be acquired within a wide wavelength range.

### BRIEF DESCRIPTION OF THE DRAWINGS

FIG.1 is an explanatory diagram showing an optical system of a spectral image acquiring device according to a first embodiment of the present invention.
FIG.2 is an explanatory diagram explaining the optical system, FIG.2A shows a front view of an enlarged view of a field aperture, FIG.2B shows a front view of a wavelength selecting member, FIG.2C shows a front view of a deflecting member, FIG.2D shows a front view of an image pickup element, and FIG.2E shows an enlarged view of FIG.2D.
FIG.3 is an explanatory diagram showing the optical system in a case where a deflecting mirror is used instead of a deflecting prism, according to the first embodiment of the present invention.
FIG.4 is a schematical block diagram showing a control device of the spectral image acquiring device, according to the first embodiment of the present invention.
FIG.5 is a flowchart explaining an acquisition of a spectral image by the spectral image acquiring device, according to the first embodiment of the present invention.
FIG.6 is an explanatory diagram showing a frame image continuously photographed by the spectral image acquiring device, according to the first embodiment of the present invention.
FIG.7A to FIG.7C are explanatory diagrams explaining a synthesis of the frame image.
FIG.8 is an explanatory diagram showing the optical system of the spectral image acquiring device according to a second embodiment of the present invention.
FIG.9 is a front view showing a wavelength selecting member of the optical system.
FIG.10 is a schematical block diagram showing a control device of the spectral image acquiring device according to the second embodiment of the present invention.
FIG.11 is a flowchart explaining an acquisition of a spectral image by the spectral image acquiring device according to the second embodiment of the present invention.

### DETAILED DESCRIPTION OF THE PREFERRED EMBODIMENTS

Description will be given below on embodiments of the present invention by referring to the attached drawings.

First, description will be given on a schematical configuration of a spectral image acquiring device according to the first embodiment of the present invention.

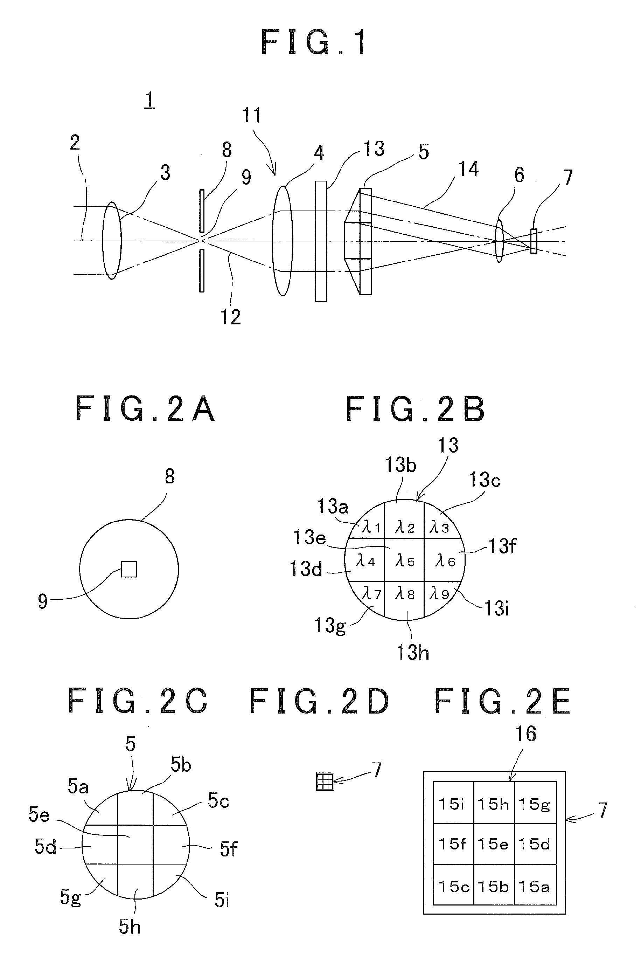

Referring to FIG.1 and FIG.2A to FIG.2E, description will be given on general features of a basic optical system 1 of the spectral image acquiring device.

In FIG.1, reference numeral 2 denotes an optical axis of the optical system 1, and an objective lens 3, a relay lens 4, a deflecting prism 5, an image forming lens 6, and an image pickup element 7 such as a CCD, a CMOS sensor, etc. are disposed on the optical axis 2. It is to be noted that the relay lens 4 and the image forming lens 6 are reducing systems, and it is configured so that an image is reduced to 1/3, for example, and projected on to the image pickup element 7. From the image pickup element 7, a digital image signal is outputted.

Between the objective lens 3 and the relay lens 4, a field aperture 8 as a field aperture member is disposed. As shown in FIG.2A, the field aperture 8 has an aperture orifice 9 with a rectangular shape such as a square shape, for example, at a center part. Further, the field aperture 8 is disposed at an object side focus position or an approximate object side focus position of the relay lens 4, and the field aperture 8 is supported perpendicularly with respect to the optical axis 2.

Here, the field aperture 8 and the relay lens 4 constitute a telecentric optical system 11. Main luminous fluxes 12 passing through the relay lens 4 are divided into a large number of parallel luminous fluxes by the telecentric optical system 11.

Between the relay lens 4 and the deflecting prism 5 on the optical path of the main luminous fluxes 12, an interference filter 13 designed in disk-like shape, which is a wavelength selecting member, is disposed. The interference filter 13 functions as a wavelength selecting filter. As shown in FIG.2B, the interference filter 13 is divided into a plurality of wavelength selecting surfaces each having different wavelength selection characteristics respectively, for example, nine wavelength selecting surfaces 13a to 13i in a matrix state. The wavelength selecting surfaces 13a to 13i selectively transmit respective different wavelengths λ1 to λ9. The main luminous fluxes 12, which passes through the wavelength selecting surfaces 13a to 13i, are divided into nine partial luminous fluxes 14 in such a manner that the nine partial luminous fluxes 14 have the wavelengths λ1 to λ9 respectively.

Further, the deflecting prism 5 is an assembly of deflecting elements for deflecting the partial luminous fluxes 14 divided by the interference filter 13, and is configured to individually deflect each of the partial luminous fluxes 14 by each of the deflecting elements.

More concretely, as shown in FIG.2C, the deflecting prism 5 is divided in correspondence with the wavelength selecting surfaces 13a to 13i of the interference filter 13, and each of the sections are referred to as prism elements 5a to 5i, respectively. The deflecting prism 5 has a surface on the image forming lens 6 side as a perpendicular plane with respect to the optical axis 2, and the center section of the deflecting prism 5 is raised toward the interference filter 13 in a side of the interference filter 13, and a cross-sectional shape of the deflecting prism 5 is trapezoidal.

The prism element 5e located at the center of the deflecting prism 5 has a square surface on the interference filter 13 side and a plane perpendicular with respect to the optical axis 2, and is a prism in which an incident surface and a transmitting surface are parallel. Further, each of the prism elements 5a, 5b, 5c, 5d, 5f, 5g, 5h, and 5i has an inclined surface inclined from the plane of the prism element 5e toward an outer periphery.

The partial luminous flux 14 passing through the wavelength selecting surface 13e enters the prism element 5e, and the partial luminous flux 14 passing through the wavelength selecting surface 13a enters the prism element 5a. Further, the partial luminous flux 14 passing through the wavelength selecting surface 13b enters the prism element 5b. Similarly, the partial luminous fluxes 14 passing through the wavelength selecting surfaces 13c, 13d, 13f, 13g, 13h, and 13i enter the prism elements 5c, 5d, 5f, 5g, 5h, and 5i, respectively.

Each of the prism elements 5a to 5i deflects the partial luminous fluxes 14 of the nine wavelength portions thus incident so as to cross each other at one point. The image forming lens 6 is disposed at a crossing position of the partial luminous fluxes 14, and is configured so that each of the deflected partial luminous fluxes 14 enters the image forming lens 6, each of the partial luminous fluxes 14 is condensed by the image forming lens 6, and focuses an image on the image pickup element 7.

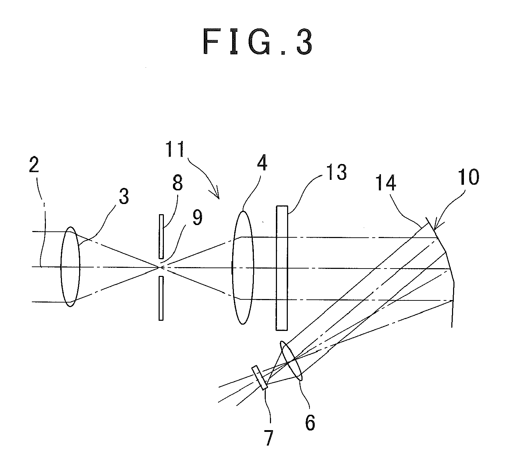

It is to be noted that since it is only necessary that the partial luminous fluxes 14 for nine wavelength portions can be deflected respectively so as to cross each other at the one point, a deflecting mirror 10 or the like may be used instead of the deflecting prism 5. As shown in FIG.3, the deflecting mirror 10 is an assembly of partial mirrors each having a reflective surface with different inclination, and each of the partial mirrors is a deflecting element of the partial luminous fluxes 14.

The partial luminous fluxes 14 for nine wavelength portions deflected by the deflecting prism 5 is focused by the image forming lens 6 at a point-symmetric position with respect to the optical axis 2 of the image pickup element 7. FIG.2E is an enlarged view of FIG.2D, and as shown in FIG.2D, and FIG.2E, a spectral image 15a is formed by the partial luminous flux 14 as deflected by the prism element 5a, and a spectral image 15b is formed by the partial luminous flux 14 as deflected by the prism element 5b. Further, spectral images 15c to 15i are formed by the partial luminous fluxes 14 as deflected by the prism elements 5c to 5i. Therefore, the spectral images 15a to 15i for nine wavelength portions are formed on the image pickup element 7, and a frame image 16 having the spectral images 15a to 15i for nine wavelength portions can be acquired.

The size of the aperture orifice 9 is set as appropriate as such a size that the spectral images 15a to 15i, which are formed on the image pickup element 7, do not overlap each other. Further, the shape of the aperture orifice 9 may be circular, but a rectangular shape is preferable so that the sizes of the spectral images 15a to 15i are ensured and so that a light receiving surface of the image pickup element 7 can be used effectively. Further, it is preferable that the shape of the aperture orifice 9 is similar to the shape of the light receiving surface.

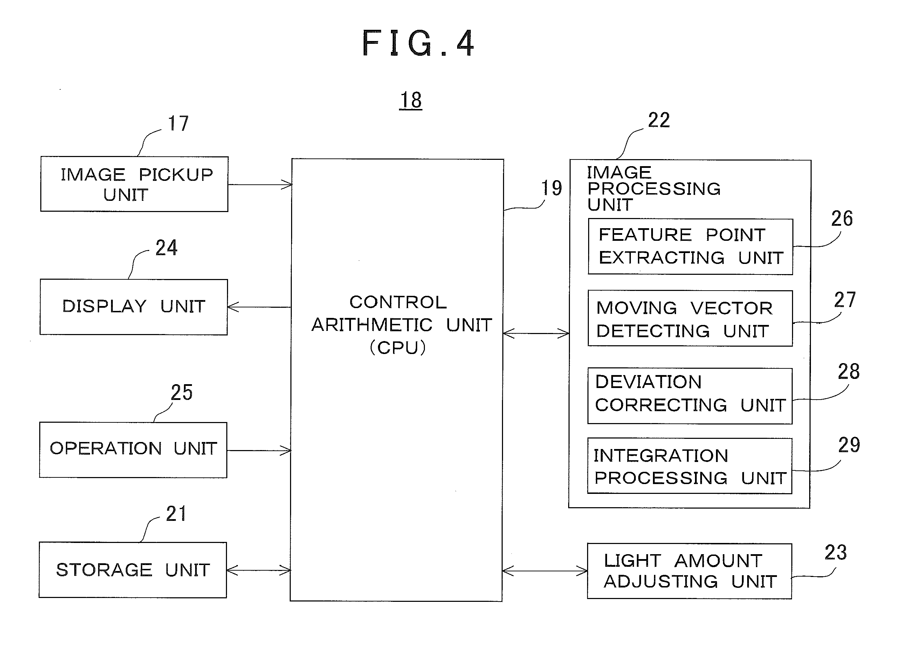

The optical system 1, the field aperture 8, the interference filter 13, the deflecting prism 5, and the image pickup element 7, etc. make up together an image pickup unit 17 (see FIG.4). The image pickup unit 17 acquires a still image at a predetermined time interval or acquires a video image.

Next, referring to FIG.4, description will be given on a control device 18 of the spectral image acquiring device according to the first embodiment of the present invention.

The control device 18 comprises the image pickup unit 17, a control arithmetic unit 19 typically represented by a CPU, a storage unit 21 such as a memory, an HDD, etc., an image processing unit 22 for processing an image data acquired by the image pickup unit 17, a light amount adjusting unit 23 for adjusting a received light amount of the image pickup element 7 and for adjusting the brightness of the spectral images 15a to 15i, a display unit 24 such as a monitor, etc., and an operation unit 25 such as a keyboard, etc.

In the storage unit 21, various programs such as a sequence program, etc. for carrying out spectral image acquisition processing for acquiring a spectral image are stored. Further, in the storage unit 21, the frame image 16 picked up by the image pickup unit 17 is associated with an acquisition time and stored as an image data in a state corresponding to an order of acquisition.

Further, the image processing unit 22 comprises a feature point extracting unit 26, a moving vector detecting unit 27, a deviation correcting unit 28, and an integration processing unit 29.

The feature point extracting unit 26 has a function of extracting a feature point from the spectral image 15. The moving vector detecting unit 27 has a function of comparing positions of feature points extracted by the feature point extracting unit 26 in the temporally adjacent spectral images 15 and of detecting a displacement vector (a direction and a distance of a deviation) between the temporally adjacent spectral images 15.

The deviation correcting unit 28 has a function of correcting the positions of the spectral images 15 based on a displacement vector as detected by the moving vector detecting unit 27 and overlapping the spectral images 15 with each other. The integration processing unit 29 has a function of integrating a value per each pixel with respect to the overlapped spectral images 15, and is configured so as to reduce a noise generated in the image pickup element 7.

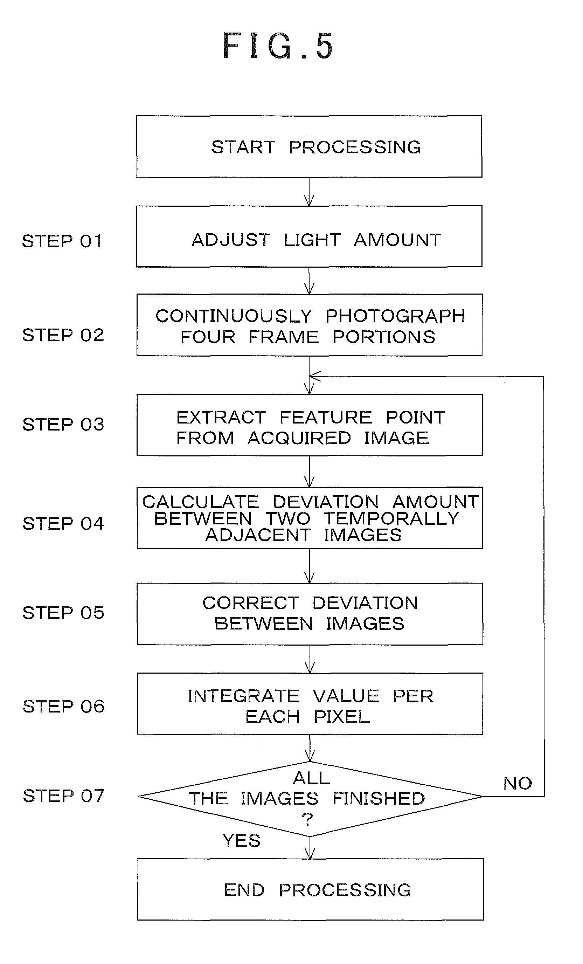

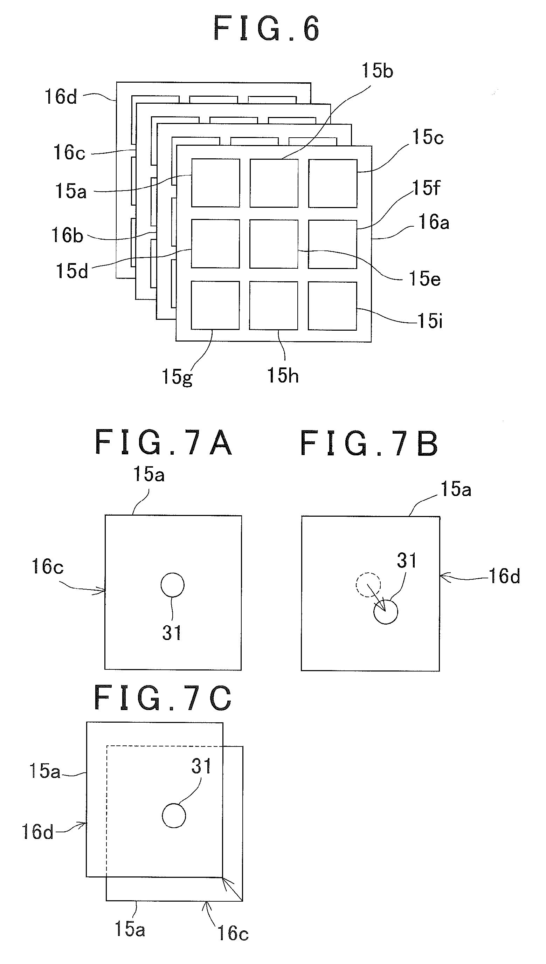

Next, by referring to the flowchart in FIG.5 and FIG.6 and FIG.7, description will be given below on a spectral image acquisition processing using the spectral image acquiring device according to the first embodiment.
(Step 01) When the spectral image acquisition processing is carried out via the operation unit 25, first, the light amount adjusting unit 23 adjusts a received light amount of the image pickup element 7 so that the brightness of the spectral images 15a to 15i received from the image pickup element 7 becomes appropriate.
(Step 02) Next, the image pickup unit 17 continuously acquires a predetermined set number of frames, that is, frame images 16a to 16d for four frames as shown in FIG. 6, for example, associates the frame images 16a to 16d with a time, and stores the frame images 16a to 16d in accordance with an order of acquisition in the storage unit 21. At this time, each of the frame images 16a to 16d includes the spectral images 15a to 15i for nine wavelength portions, wherein the spectral images 15a to 15i are acquired by the nine partial luminous fluxes 14 which pass through the wavelength selecting surfaces 13a to 13i and have the wavelengths λ1 to λ9.
(Step 03) When the frame images 16a to 16d are acquired, then, the feature point extracting unit 26 extracts a feature point from each of the spectral images 15a to 15i of the frame images 16a to 16d, and selects at least one feature point 31 that is common among the frame images 16a to 16d and can be compared.

With respect to the spectral images 15a to 15i in the same frame image 16, since the position of the feature point 31 coincides in all images, the feature point 31 may be extracted from only one of the spectral images 15a to 15i. Further, it is preferable that the brightest image in the spectral images 15a to 15i is selected for the extraction of the feature point 31 so that the comparison among the frame images 16 is facilitated. FIG.7 shows a case where the feature point extracting unit 26 extracts the feature point 31 from the spectral image 15a, for example.

(Step 04) When the feature point 31 is extracted by the feature point extracting unit 26, the moving vector detecting unit 27 compares a position on a pixel of the feature point 31 in the frame image 16d acquired in the fourth order, with a position on a pixel of the feature point 31 in the frame image 16c acquired in the temporally adjacent third order, for example, and detects a distance and a direction between the feature points 31 and 31, namely, a displacement vector.

(Step 05) After detecting the displacement vector by the moving vector detecting unit 27, the deviation correcting unit 28 corrects the position of the frame image 16d based on the displacement vector as detected. By a correction of the deviation correcting unit 28, the frame image 16d is overlapped on the frame image 16c so that the position of the feature point 31 in the frame image 16d coincide with the position of the feature point 31 in the frame image 16c.

(Step 06) After the frame image 16d is overlapped on the frame image 16c, the integration processing unit 29 integrates a value per each pixel with respect to the overlapped portion. By the integration of the integration processing unit 29, in the frame images 16c and 16d, the feature points are enhanced, the portion other than the feature points is averaged, and the noise generated in the image pickup element 7 is reduced.

Similarly to the case of the frame image 16c and the frame image 16d, the processing from Step 03 to Step 06 is carried out for the frame images 16a and 16b. By the processing from Step 03 to Step 06, the frame image 16c is overlapped on the frame image 16b, and the frame image 16b is overlapped on the frame image 16a.

(Step 07) The control arithmetic unit 19 determines whether or not all four of the frame images 16a to 16d are overlapped. The control arithmetic unit 19 finishes the processing according to a determination, that all of the frame images 16a to 16d are overlapped.

By the processing from Step 03 to Step 06 is carried out with respect to the frame images 16a to 16d, and further, a value per each pixel is integrated for the portion where the frame images 16a to 16d are overlapped, and the portion other than the feature points is averaged, the spectral images 15a to 15i for nine wavelength portions are acquired in which the noise generated in the image pickup element 7 is reduced.

As described above, in the first embodiment, the interference filter 13, which has the wavelength selecting surfaces 13a to 13i with different wavelength selection characteristics respectively, divides the main luminous fluxes 12 into the partial luminous fluxes 14 and the partial luminous fluxes 14 are received by the image pickup element 7. Therefore, the spectral images 15a to 15i for nine wavelength portions can be acquired at the same time on the same image pickup element 7, and further, since the frame images 16a to 16d can also be acquired instantaneously, a stability of the measurement of the spectral images 15a to 15i can be improved.

Further, since the deflecting prism 5, which has the prism elements 5a to 5i with different inclinations respectively, is disposed on the optical path of the main luminous fluxes 12, and each of the partial luminous fluxes 14 for nine wavelength portions which passes through the wavelength selecting surfaces 13a to 13i, is deflected by the deflecting prism 5 so as to cross each other at one point, and the image forming lens 6 is provided at the position where each of the partial luminous fluxes 14 crosses each other, an aperture of the image forming lens 6 can be made small, and miniaturizing of the device and decreasing of a manufacturing cost can be realized.

Further, since the frame images 16a to 16d for a plurality of frame portions, that is, four frames in the first embodiment, for example, are continuously acquired, the deviation among the frame images 16a to 16d is corrected, and then, each of the frame images 16a to 16d is overlapped and a value per each pixel is integrated for the overlapped portion, the portion other than the feature points of the frame images 16a to 16d is averaged, and a noise generated in the image pickup element 7 can be reduced when photodetecting.

Further, since the size of the aperture orifice 9 and the state of deflection of the deflecting prism 5 are set to such a size that the spectral images 15a to 15i formed on the image pickup element 7 do not overlap each other, overlapping of the spectral images 15a to 15i on the image pickup element 7 and a deterioration of measurement accuracy can be prevented.

In the first embodiment, the interference filter 13 is divided into 9 parts by the wavelength selecting surfaces 13a to 13i with different wavelength selection characteristics respectively, but it can be configured so that any one of the wavelength selecting surfaces 13a to 13i may be made an entire wavelength transmitting surface for transmitting all the wavelengths and the feature point 31 may be extracted from the image acquired by the entire wavelength transmitting surface.

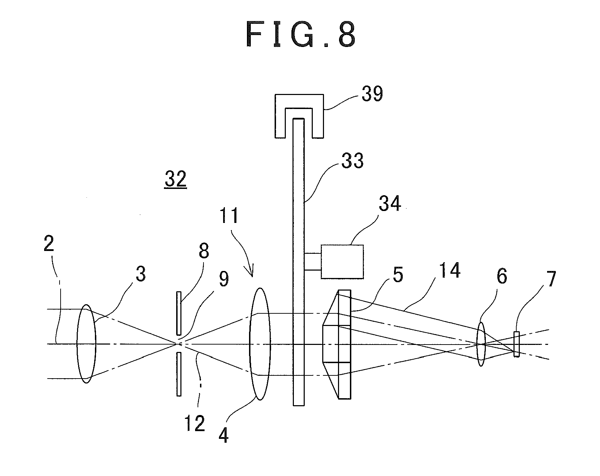

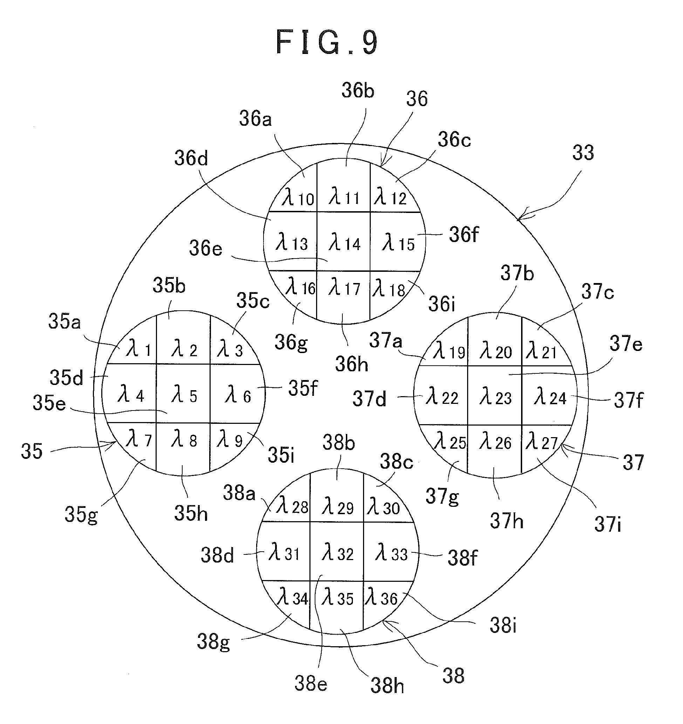

Next, referring to FIG.8 and FIG.9, description will be given on a spectral image acquiring device according to the second embodiment of the present invention. It is to be noted that FIG.8 shows a schematical configuration of an optical system 32 of the spectral image acquiring device, and the same component as shown in FIG.1 is referred by the same reference numerals, and the explanation will be omitted.

In the optical system 32 in the second embodiment, between a relay lens 4 and a deflecting prism 5, a disk-shaped filter plate 33, which is a wavelength selecting member holding plate, is disposed. The filter plate 33 is capable of intermittent rotation by a pulse motor 34 as a driving unit. The filter plate 33 is provided with a mark, or a pattern, or a pinhole indicating a reference position.

Further, in the filter plate 33, as shown in FIG.9, interference filter portions 35 to 38, as wavelength selecting members, are formed at four points at a predetermined angular pitch, that is, a pitch of 90°, for example, and the interference filter units 35 to 38 function as wavelength selecting filters. The interference filter portions 35 to 38 are configured to be arranged on the optical path of the main luminous fluxes 12 respectively, by being intermittently rotated by the pulse motor 34. In a case where the interference filter portions 35 to 38 are arranged on the optical path of the main luminous fluxes 12, it is configured so that the centers of the interference filter units 35 to 38 coincide with the optical axis 2 of the optical system 32.

Further, the interference filter unit 35 is divided into a plurality of wavelength selecting surfaces, for example, nine wavelength selecting surfaces 35a to 35i and the wavelength selecting surfaces 35a to 35i selectively transmit different wavelengths λ1 to λ9 respectively. Further, the interference filter unit 36 is divided into nine wavelength selecting surfaces 36a to 36i, and the wavelength selecting surfaces 36a to 36i selectively transmit different wavelengths λ10 to λ18 respectively. Further, the interference filter unit 37 is divided into nine wavelength selecting surfaces 37a to 37i, and the wavelength selecting surfaces 37a to 37i selectively transmit different wavelengths λ19 to λ27 respectively. Further, the interference filter unit 38 is divided into nine wavelength selecting surfaces 38a to 38i, and the wavelength selecting surfaces 38a to 38i selectively transmit different wavelengths λ28 to λ36 respectively.

Further, with respect to the filter plate 33, a 0-detector 39 is provided. The 0-detector 39 detects a mark, or a pattern, or a pinhole (not shown), which indicate the reference position of the filter plate 33 and can detect the 0-position which is the reference position in a rotating direction.

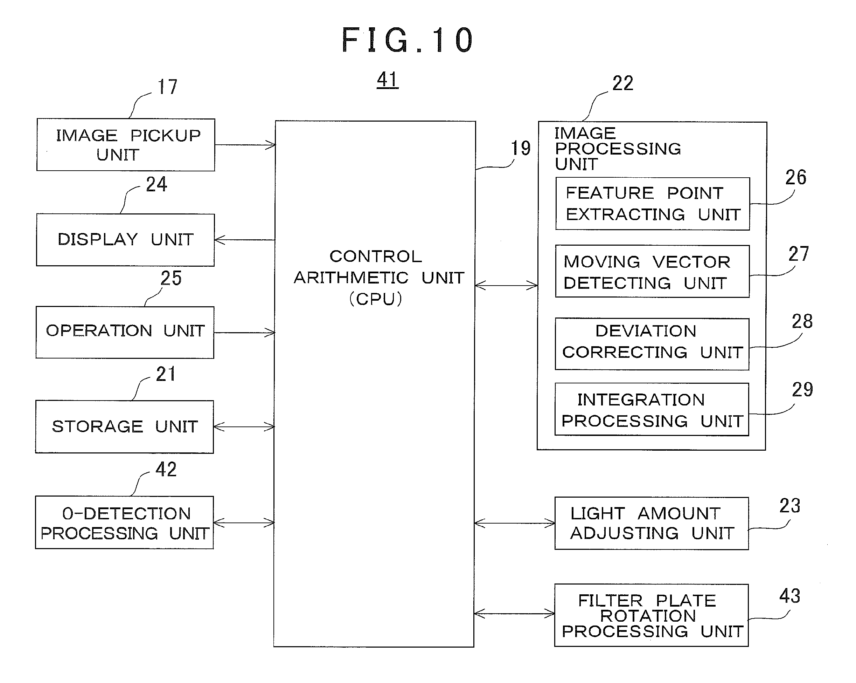

FIG.10 shows a control device 41 of the spectral image acquiring device according to the second embodiment of the present invention. It is to be noted that in FIG.10, the same component as shown in FIG.4 is referred by the same reference numerals and the explanation will be omitted.

The control device 41 further comprises a 0-detection processing unit 42 which detects the 0-position which is the reference position in the rotating direction of the filter plate 33, based on a signal from the 0-detector 39 and rotates the filter plate 33 to the 0-position, and a filter plate rotation processing unit 43 which arranges the desired interference filter units 35 to 38 on the optical path of the main luminous fluxes 12 by driving the pulse motor 34 and by rotating the filter plate 33.

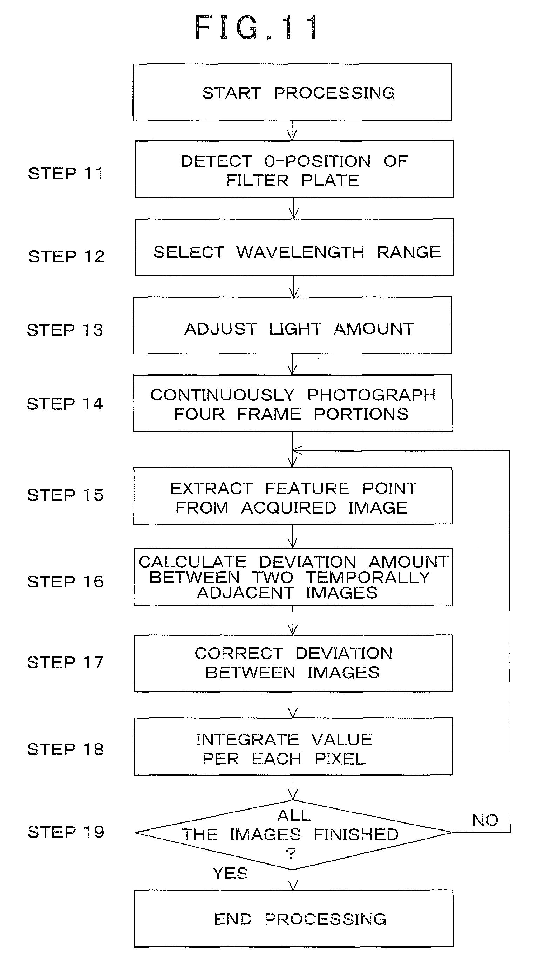

Next, by referring to a flowchart in FIG.11, description will be given on a spectral image acquisition processing using the spectral image acquiring device according to the second embodiment.

(Step 11) When the spectral image acquisition processing is started, first, by the 0-detection processing unit 42, the 0-detector 39 detects a mark, a pattern or a pinhole, etc. indicating the 0-position. The 0-position is detected by rotating the filter plate 33 by the filter rotation processing unit 43 until a detection signal of the 0-position is outputted from the 0-detector 39.

(STEP 12) After the filter plate 33 is positioned at the 0-position, the filter plate rotation processing unit 43 rotates the filter plate 33 only by a predetermined amount via the pulse motor 34 so that the desired interference filter units 35 to 38 are arranged on the optical path of the main luminous fluxes 12.

It is to be noted that since Step 13 to Step 19 are similar to Step 01 to Step 07 in the first embodiment, the explanation will be omitted.

By carrying out the above processing, the frame images 16a to 16d (see FIG.6) for a plurality of frame portions, e.g. for four frame portions, are all overlapped in a state in which a deviation has been corrected. Further, by the integration of the value per each pixel of the overlapped portion, the portion other than the feature points of the frame images 16a to 16d is averaged. As a result, the spectral images 15a to 15i (see FIG.6) for nine wavelength portions selected on the wavelength selecting surface with respect to the interference filter unit selected at Step 12 can be acquired, and the noise of the spectral image to be acquired can be reduced.

As described above, in the second embodiment, the filter plate 33, which has a plurality of the interference filter units 35 to 38, is provided, and the spectral images 15a to 15i for nine different wavelength portions can be acquired by each of the interference filter units 35 to 38 respectively.

Therefore, the interference filter units 35 to 38 of the wavelength range can be selected according to the application or the object to be measured, and the spectral images 15a to 15i can be acquired within a wide wavelength range.

In the second embodiment, the interference filter units 35 to 38 is divided into 9 parts, the wavelength selecting surfaces 35a to 35i, 36a to 36i, 37a to 37i, and 38a to 38i having different wavelength selection characteristics respectively, but any one of the wavelength selecting surfaces 35a to 35i may be made an entire wavelength transmitting surface which transmits all the wavelengths, and with respect to the wavelength selecting surfaces 36a to 36i, 37a to 37i, and 38a to 38i, the wavelength selecting surface corresponding to the entire wavelength transmitting surface of the wavelength selecting surfaces 35a to 35i may be made the entire wavelength transmitting surface respectively. When an image is acquired via the entire wavelength transmitting surface and the interference filter units 35 to 38 are switched, by comparing the feature points 31 (see FIG. 7) extracted from the images with each other and by acquiring a movement amount, a position correction at the time of switching of the interference filter units 35 to 38 can be carried out based on the movement amount.

Further, in the first embodiment and the second embodiment, the deviation among the acquired frame images 16a to 16d is corrected and then overlapped, but in a case where the spectral image is acquired in a state in which the spectral image acquiring device stands still, since a deviation does not exist among the acquired frame images 16a to 16d, the frame images 16a to 16d can be overlapped without detecting a displacement vector or correcting the deviation. Further, by carrying out an additional averaging processing among the frame images 16a to 16d, a noise generated in the image pickup element 7 can be reduced.

## Claims

1. A spectral image acquiring device comprising, an objective lens (3), a field aperture member (8) for limiting a size of an image passing through said objective lens and focusing, a wavelength selecting member (13) arranged on an optical axis (2) of said objective lens, having two or more wavelength selecting surfaces (13a-13i) and having different wavelength selection characteristics for each of said wavelength selecting surfaces, a deflecting member (5) for deflecting partial luminous fluxes (14) passing through said wavelength selecting surface, an image pickup element (7) arranged on the optical axis of said objective lens, and an image forming lens (6) for focusing said partial luminous fluxes deflected by said deflecting member on said image pickup element for each of the partial luminous fluxes.

2. The spectral image acquiring device according to claim 1, wherein said deflecting member (5) has two or more deflecting elements (5a-5i) corresponding to each of said wavelength selecting surfaces (13a-13i) and respectively deflecting said partial luminous fluxes (14) passing through each of said wavelength selecting surfaces, and said deflecting elements respectively deflect said partial luminous fluxes so that said partial luminous fluxes cross each other at one point.

3. The spectral image acquiring device according to claim 2, wherein said image forming lens (6) is arranged at a crossing position of said partial luminous fluxes (14).

4. The spectral image acquiring device according to claim 1 or claim 2, wherein said deflecting member (5) is a prism.

5. The spectral image acquiring device according to claim 1, further comprising a control device (18), wherein said control device detects a displacement vector between frame images (16) continuously photographed in the predetermined number of frames, overlaps each frame image based on a detected displacement vector, and integrates a value per each pixel.

6. The spectral image acquiring device according to claim 5, wherein said control device (18) extracts a feature point for all of the spectral images (15), and selects and overlaps said spectral image having feature points (31) that can be compared between said frame images (16).

7. The spectral image acquiring device according to claim 1, further comprising a wavelength selecting member holding plate (33) and a driving unit (34) for rotating and driving said wavelength selecting member holding plate, wherein in said wavelength selecting member holding plate, two or more of said wavelength selecting members (35, 36, 37, 38) each having two or more of said wavelength selecting surfaces are provided at a predetermined angular pitch, and desired said wavelength selecting member is arranged on an optical path of luminous fluxes by the rotating and driving of said driving unit.

8. The spectral image acquiring device according to claim 5, further comprising a wavelength selecting member holding plate (33) and a driving unit (34) for rotating and driving said wavelength selecting member holding plate, wherein in said wavelength selecting member holding plate, two or more of said wavelength selecting members (35, 36, 37, 38) each having two or more said wavelength selecting surfaces are provided at a predetermined angular pitch, and desired said wavelength selecting member is arranged on an optical path of luminous fluxes by the rotating and driving of said driving unit.

9. The spectral image acquiring device according to claim 7, wherein one of said wavelength selecting surfaces is an entire wavelength transmitting surface, and a feature point (31) is extracted from an image passing through the entire wavelength transmitting surface and focused on said image pickup element (7).

10. The spectral image acquiring device according to claim 8, wherein one of said wavelength selecting surfaces is an entire wavelength transmitting surface, and a feature point (31) is extracted from an image passing through the entire wavelength transmitting surface and focused on said image pickup element (7).

11. A spectral image acquiring method comprising, a step of dividing luminous fluxes into two or more partial luminous fluxes (14) by two or more wavelength selecting surfaces (13a-13i) having different wavelength characteristics, respectively, a step of deflecting each of said partial luminous fluxes passing through said wavelength selecting surfaces by a deflecting member (5), a step of condensing each of said partial luminous fluxes deflected by said deflecting member by using an image forming lens (6), and a step of forming an image of said partial luminous fluxes condensed by said image forming lens on an image pickup element (7) and acquiring a frame image (16) having a spectral image (15) with two or more wavelengths.

12. The spectral image acquiring method according to claim 11, wherein the step of acquiring said frame image (16) has a step of photographing said frame images in a predetermined number of frames by an image pickup unit (17), a step of extracting feature points (31) common in each of said frame images, a step of comparing said feature points between said frame images temporally adjacent and detecting a displacement vector between said frame images, a step of correcting positions between said frame images based on the detected displacement vector and overlapping said frame images, and a step of integrating a value per each pixel of an overlapping portion of each of said frame images.

13. The spectral image acquiring method according to claim 12, wherein said image pickup unit (17) has a wavelength selecting plate (33) rotatably where two or more wavelength selecting members (35, 36, 37, 38), having two or more wavelength selecting surfaces, are provided at a predetermined angular pitch, wherein in the step of photographing said frame image (16), a desired wavelength selecting member is selected by a rotation of said wavelength selecting plate, and said frame image having a spectral image (15) within a desired wavelength range is acquired.
